# EUROPÄISCHE PATENTSCHRIFT

(11) **EP 0 838 388 B1**
(45) Veröffentlichungstag und Bekanntmachung des Hinweises auf die Patenterteilung: **05.09.2001**
(21) Anmeldenummer: 97117374.5
(22) Anmeldetag: 08.10.1997
(51) Int. Cl.: B62D 23/00

(54) **Personenkraftwagen mit einer Karosserietragstruktur**
Body structure for a passenger vehicle
Structure de carosserie de véhicule automobile

(30) Priorität: 26.10.1996 DE 19644531
(43) Veröffentlichungstag der Anmeldung: 29.04.1998
(73) Patentinhaber: DaimlerChrysler AG, 70567 Stuttgart (DE)
(72) Erfinder: Haberstroh, Rudolf, 70378 Stuttgart (DE)

(56) Entgegenhaltungen:
- DE-A- 2 923 874
- DE-A- 3 035 333
- DE-C- 4 240 822
- FR-A- 2 369 140
- FR-A- 2 687 974
- GB-A- 570 814

## Beschreibung

Die Erfindung betrifft einen Personenkraftwagen mit einer einen Frontbereich und einen Heckbereich aufweisenden Karosserietragstruktur sowie mit einer mit der Karosserietragstruktur verbundenen Karosseriebeplankung, wobei die Karosserietragstruktur einen im Frontbereich angeordneten Aggregatraum zur Aufnahme eines Antriebsaggregates sowie zugehöriger Funktionseinheiten aufweist.

Aus der FR 2 687 974 A1 ist ein Fahrzeugchassis bekannt, das aus Metallblechteilen einerseits und Kunststoffmaterialteilen andererseits aufgebaut ist. Die Kunststoffmaterialteile und die Metallblechteile sind miteinander verklebt. Die Metallblechteile sind vorzugsweise aus Aluminium hergestellt.

Bei Personenkraftwagen ist es bekannt (VDI-Berichte 968 "Entwicklungen im Karosseriebau", VDI-Verlag Düsseldorf, 1992) die selbsttragende Karosserie nicht ausschließlich aus Stahl, sondern in einer Mischbauweise zu fertigen. Bei dieser Mischbauweise wird die Karosserietragstruktur aus Stahlblech und die Karosseriebeplankung aus Aluminiumblech hergestellt. Dadurch wird eine Gewichtsreduzierung für den Personenkraftwagen erreicht, der eine Verbesserung der Fahrdynamik sowie eine Reduzierung des Kraftstoffverbrauchs bewirkt. Die Mischbauweise kann jedoch zu einer ungünstigen Achslastverteilung führen, die durch zusätzliche konstruktive Schritte ausgeglichen werden muß.

Aufgabe der Erfindung ist es, einen Personenkraftwagen der eingangs genannten Art zu schaffen, der ein gegenüber bekannten Stahlblechkonstruktionen verringertes Gewicht und dennoch eine günstige Achslastverteilung aufweist.

Diese Aufgabe wird dadurch gelöst, dass ein dem Aggregatraum zugeordneter Abschnitt der Karosserietragstruktur sowie die diesen Abschnitt umgebenden Karosserieteile der Karosseriebeplankung zumindest teilweise aus einem gegenüber der übrigen Karosserietragstruktur und gegenüber der übrigen Karosseriebeplankung gewichtsreduzierten Werkstoff hergestellt sind. Die erfindungsgemäße Lösung geht davon aus, dass die Leichtbaumaßnahmen lediglich die selbsttragende Karosserie betreffen, nicht jedoch das Antriebsaggregat selbst. Bei einer symmetrischen Anordnung der Leichtbauteile über die Länge der Karosserie verteilt würde sich aufgrund des weiterhin hohen Gewichts des Antriebsaggregates auf Höhe der zum Antriebsaggregat benachbarten Radachse eine hohe Achslast ergeben, die zu einer schlechten Fahrdynamik, insbesondere zu einer schlechten Traktion, führen würde. Eine andere Verteilung der Achslast wie durch eine Verlegung der Batterie in den Bereich der anderen Radachse würde hier zwar einen gewissen Ausgleich schaffen, gleichzeitig jedoch den nutzbaren Raum innerhalb der Fahrzeugkarosserie reduzieren. Denn zum einen benötigte die Batterie im Bereich der anderen Radachse einen zusätzlichen Einbauraum und zum anderen ergäben sich durch die entfernte Anordnung der Batterie zu den zugehörigen Funktionseinheiten längere Kabel- und Leitungswege, die jeweils zusätzlichen Raum beanspruchten. Die erfindungsgemäße Lösung geht einen vollkommen anderen Weg, indem sie keine symmetrische, sondern eine asymmetrische Verteilung der Leichtbauelemente vornimmt und zwar insbesondere in dem Karosseriebereich, der aufgrund des Antriebsaggregates ein erhöhtes Gewicht aufweist. Da in den übrigen Bereichen der Karosserie die herkömmliche Stahlblechbauweise beibehalten wurde, ergibt sich auch ohne zusätzliche Achslastverteilungsmaßnahmen bereits eine ausgewogene und optimierte Achslastverteilung. Im Bereich der Radachse, in dem das schwere Antriebsaggregat sitzt, wird die Karosserie in Leichtbauweise ausgeführt und im Bereich der anderen Radachse wird die herkömmliche Konstruktion beibehalten. Dadurch kann zwar keine so große Gewichtsreduzierung erzielt werden, wie dies bei einer symmetrischen Mischbauweise der Fall wäre. Dieser Nachteil wird jedoch durch die automatisch vorhandene günstige Achslastverteilung sowie durch den demzufolge auch nicht reduzierungsbedürftigen Einbauraum sowie durch die aufgrund des geringeren Aufwandes reduzierten Kosten mehr als ausgeglichen. Die zuvor beschriebene erfindungsgemäße Lösung betrifft insbesondere einen Personenkraftwagen mit einem Frontmotor und einem Heckantrieb. In gleicher Weise ist die erfindungsgemäße Lösung für Personenkraftwagen mit Frontmotor und Frontantrieb einsetzbar.

In Ausgestaltung der Erfindung sind der dem Aggregatraum zugeordnete Bereich der Karosserietragstruktur sowie die diesen Bereich umgebenden Karosserieteile aus Aluminium und die übrige Karosserietragstruktur und Karosseriebeplankung aus Stahl hergestellt. Die Verwendung von Aluminium ist im Hinblick auf die vorteilhaften Verarbeitungsmöglichkeiten besonders zweckmäßig.

In weiterer Ausgestaltung der Erfindung sind Fahrgestellteile, insbesondere eine Radachse, auf Höhe des Aggregatraumes aus einem Leichtwerkstoff, insbesondere Aluminium, hergestellt. Dadurch wird eine weitere Möglichkeit geschaffen, im Bereich des Aggregatraumes Gewicht einzusparen. Diese Ausgestaltung ist vorteilhaft, falls die zuvor angeführten Maßnahmen zur Gewichtreduzierung der Karosserie auf Höhe des Aggregatraumes für eine gleichmäßige Achslastverteilung auf die Vorder- und die Hinterachse noch nicht ausreichend sind.

Nachfolgend ist eine bevorzugte Ausführungsform der Erfindung beschrieben und anhand der Zeichnungen dargestellt.
- Fig. 1: zeigt schematisch eine Seitenansicht einer Ausführungsform eines erfindungsgemäßen Personenkraftwagens, dessen vorderer Karosserieteil in Leichtbauweise ausgeführt ist, und
- Fig. 2: eine Draufsicht auf den Personenkraftwagen nach Fig. 1.

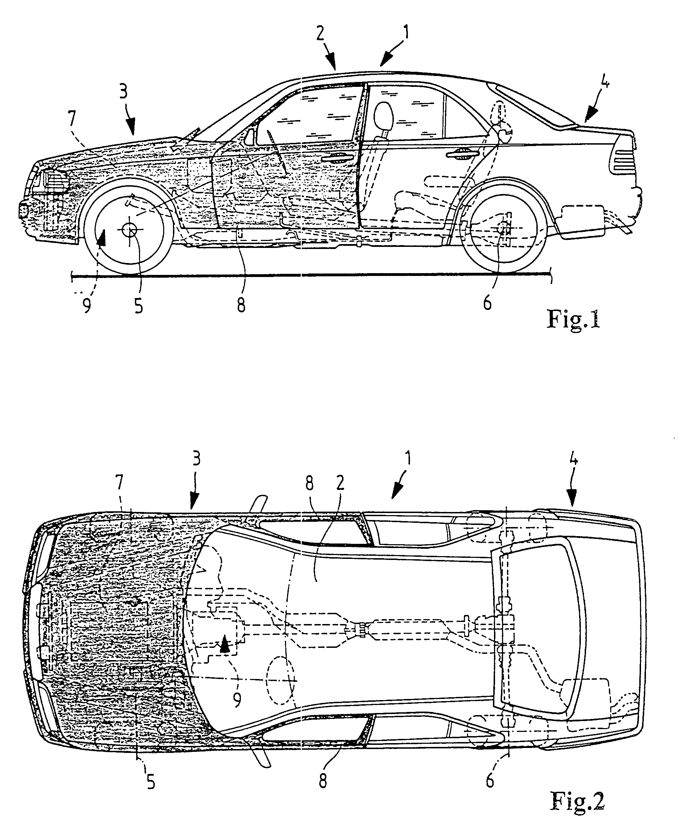

Ein Personenkraftwagen 1 gemäß den Fig. 1 und 2 weist eine selbsttragende Fahrzeugkarosserie auf, die in einen Vorbaubereich 3, eine Fahrgastzelle 2 sowie einen Heckbereich 4 unterteilt ist. Die Fahrzeugkarosserie setzt sich aus einer Karosserietragstruktur sowie aus einer mit der Karosserietragstruktur verbundenen Karosseriebeplankung zusammen. Im Vorbaubereich 3 wird die Karosserietragstruktur insbesondere aus Vorbaulängs- und Querträgern gebildet. Karosseriebeplankungsteile sind insbesondere die seitlichen vorderen Kotflügel sowie die Motorhaube. Im Bereich der Fahrgastzelle 2 weist die Karosserietragstruktur einen insbesondere aus mehreren Längs- und Querträgern gebildeten Fahrzeugboden sowie seitliche, nach oben ragende Tragsäulen auf, die in einem Dachbereich durch Dachrahmenteile miteinander verbunden sind. Zur Karosseriebeplankung für die Fahrgastzelle 2 zählen neben der Dachbeplankung insbesondere die vorderen und hinteren Seitentüren. Der Heckbereich 4 weist Längs- und Querträger auf, die Teil der Karosserietragstruktur sind. Zur Karosseriebeplankung im Heckbereich 4 zählen neben dem Kofferraumdekkel auch die seitlichen hinteren Kotflügel.

Der Personenkraftwagen 1 weist im Vorbaubereich 3 eine vordere Radachsanordnung 5 und zwischen der Fahrgastzelle 2 und dem Heckbereich 4 eine hintere Radachsanordnung 6 auf. Im Vorbaubereich 3 und damit im Bereich der vorderen Radachsanordnung 5 ist ein Antriebsaggregat 9 angeordnet, dessen Antriebskraft über eine Kardanwelle zu der hinteren Radachsanordnung 6 übertragen wird. Der Aggregatraum 7, in dem das Antriebsaggregat angeordnet ist, schließt zur Fahrgastzelle 2 hin durch eine Stirnwand ab, die Teil der Karosserietragstruktur ist. Im Aggregatraum 7 sind neben dem Antriebsaggregat 9 noch weitere Funktionseinheiten angeordnet, insbesondere auch eine Batterie zur Stromversorgung der verschiedenen elektrischen Funktionseinehiten des Personenkraftwagens 1.

Da aufgrund des hohen Gewichts des Antriebsaggregates 9 einschließlich der weiteren Funktionseinheiten wie insbesondere der Batterie auf die vordere Radachsanordnung 5 eine relativ hohe Achslast ausgeübt wird, sind in diesem Bereich sowohl die Karosserietragstruktur als auch die zugehörige Karosseriebeplankung gewichtsreduziert, indem sie zumindest teilweise aus einen Leichtbauwerkstoff, nämlich aus Aluminium, hergestellt sind. Beim dargestellten Ausführungsbeispiel sind die Vorbaulängs- und -querträger sowie die Stirnwand der Karosserietragstruktur aus Aluminium hergestellt. Auch die Trägerteile der vorderen Radachsanordnung 5 sind aus Aluminium hergestellt. Außerdem sind die auf Höhe des Aggregatraumes 7 befindlichen Karosserieteile der Karosseriebeplankung aus Aluminiumblech hergestellt, nämlich die seitlichen vorderen Kotflügel und die Fronthaube.

Zusätzlich sind noch die vorderen Seitentüren 8 ebenfalls aus einem Leichtwerkstoff, nämlich Aluminium, hergestellt. Somit sind insbesondere großvolumige Teile der Karosserietragstruktur und der Karosseriebeplankung in einem vorderen Fahrzeugbereich vor einer Fahrzeugmittelquerachse, die sich etwa auf Höhe von B-Säulen der Fahrgastzelle 2 befindet, aus einem Leichtbauwerkstoff hergestellt. Die hinter der Fahrzeugmittelquerachse befindlichen Teile der Karosserietragstruktur und der Karosseriebeplankung, d.h. die Teile im hinteren Bereich der Fahrgastzelle 2 sowie im Heckbereich 4, hingegen sind als Stahlblechkonstruktionen ausgeführt. Die Verteilung der Leichtbauteile der Karosserietragstruktur und der Karosseriebeplankung ist somit asymmetrisch zu einem Fahrzeugschwerpunkt erfolgt, indem lediglich der vordere Fahrzeugbereich, der aufgrund des Antriebsaggregates 9 bereits eine höhere Achslast zu tragen hat, durch die Verwendung von Leichtbauteilen gewichtsreduziert ist. Das durch das Antriebsaggregat 9 sowie die zugehörigen Funktionseinheiten im Aggregatraum 7 verursachte höhere Gewicht im Bereich der vorderen Radachsanordnung 5 wird somit durch die Verwendung der Leichtbauteile für die Fahrzeugkarosserie derart ausgeglichen, daß sich eine ausgewogene und gleichmäßige Achslastverteilung auf beide Radachsanordnungen 5, 6 ergibt. Da im Bereich der hinteren Radachsanordnung 6 kein Antriebsaggregat vorgesehen ist, kann hier die Fahrzeugkarosserie in herkömmlicher Stahlbauweise gestaltet sein, wodurch das durch das Antriebsaggregat 9 erhöhte Gewicht für die vordere Radachsanordnung 5 wieder ausgeglichen wird. Erfindungsgemäß bleiben die weiteren Funktionseinheiten für das Antriebsaggregat 9 dem Aggregatraum 7 räumlich kompakt zugeordnet, so daß sich auch kurze Leitungs- und Kabelwege für entsprechende Verbindungen ergeben. Im Bereich der hinteren Radachsanordnung 6 muß kein zusätzlicher Einbauraum zur Verfügung gestellt werden, der für Maßnahmen zum Ausgleichen unterschiedlicher Achslasten dient.

## Patentansprüche

1. Personenkraftwagen (1) mit einer einen Frontbereich (3) und einen Heckbereich (4) aufweisenden Karosserietragstruktur sowie mit einer mit der Karosserietragstruktur verbundenen Karosseriebeplankung, wobei die Karosserietragstruktur einen im Frontbereich angeordneten Aggregatraum (7) zur Aufnahme eines Antriebsaggregates (9) sowie zugehöriger Funktionseinheiten aufweist,
**dadurch gekennzeichnet, dass**
ein dem Aggregatraum (9) zugeordneter Abschnitt der Karosserietragstruktur sowie die diesen Abschnitt umgebenden Karosserieteile (7, 8) der Karosseriebeplankung zumindest teilweise aus einem gegenüber der übrigen Karosserietragstruktur und gegenüber der übrigen Karosseriebeplankung gewichtsreduzierten Werkstoff hergestellt sind.

2. Personenkraftwagen nach Anspruch 1,
**dadurch gekennzeichnet,**
daß der dem Aggregateraum (9) zugeordnete Bereich der Karosserietragstruktur sowie die diesen Bereich umgebenden Karosserieteile aus Aluminium und die übrige Karosserietragstruktur und Karosseriebeplankung aus Stahl hergestellt sind.

3. Personenkraftwagen nach Anspruch 2,
**dadurch gekennzeichnet,**
daß Fahrgestellteile, insbesondere eine Radachse (5), auf Höhe des Aggregatraumes (9) aus dem Leichtwerkstoff hergestellt sind.

## Claims

1. Motor vehicle (1) with a body support structure comprising a front region (3) and a rear region (4) and bodywork panelling joined to the body support structure, the body support structure having an assembly space (7) arranged in the front region for receiving a drive unit (9) and associated functional units,
**characterised in that**
a section of the body support structure assigned to the assembly space (9) and body parts (7. 8) of the bodywork panelling surrounding this section are at least partially made from a material that is lighter than the rest of the body support structure and than the rest of the bodywork panelling.

2. Motor vehicle as claimed in claim 1,
**characterised in that**
the region of the body support structure assigned to the drive unit (9) and the parts of the bodywork surrounding this region are made from aluminium and the rest of the body support structure and bodywork panelling are made from steel.

3. Motor vehicle as claimed in claim 2,
**characterised in that**
parts of the vehicle, in particular a wheel axle (5), on a level with the drive unit (9) are made from the lightweight material.

## Revendications

1. Voiture particulière (1) avec une structure porteuse de carrosserie présentant une zone avant (3) et une zone arrière (4), ainsi qu'avec un panneau de carrosserie relié à la structure porteuse de carrosserie, la structure porteuse de carrosserie présentant un espace pour groupe (7) disposé en avant, devant recevoir un groupe d'entraînement (9), ainsi que des unités fonctionnelles afférentes,
**caractérisée en ce que**
un tronçon, associé à l'espace pour groupe (9), de la structure porteuse de carrosserie, ainsi que les parties de carrosserie (7, 8), entourant ce tronçon, du panneau de carrosserie sont fabriquées au moins partiellement à partir d'un matériau réduisant le poids par rapport au reste de la structure porteuse de carrosserie et par rapport au reste du panneau de carrosserie.

2. Voiture particulière selon la revendication 1, **caractérisée en ce que** la zone, associée à l'espace pour groupe (9), de la structure porteuse de carrosserie, ainsi que les parties de carrosserie entourant cette zone, sont fabriquées en aluminium et le reste de la structure porteuse de carrosserie et du panneau de carrosserie sont fabriqués en acier.

3. Voiture particulière selon la revendication 2, **caractérisée en ce que** des parties de suspension, en particulier un essieu (5), sont fabriquées au niveau de l'espace de groupe (9) à partir du matériau en alliage léger.
